# EUROPÄISCHE PATENTANMELDUNG

(11) **EP 3 135 089 A1**
(43) Veröffentlichungstag der Anmeldung: **01.03.2017**
(21) Anmeldenummer: 16401051.4
(22) Anmeldetag: 22.08.2016
(51) Int. Cl.: A01C 7/04, A01C 7/08, A01C 7/10

(54) **SÄMASCHINE UND VERFAHREN ZUM BETREIBEN EINER SÄMASCHINE**

(30) Priorität: 26.08.2015 DE 102015114156
(71) Anmelder: Amazonen-Werke H. Dreyer GmbH & Co. KG, 49205 Hasbergen (DE)
(72) Erfinder: Johannaber, Stefan Jan, 49536 Lienen (DE); Rahe, Florian, 49504 Lotte (DE); Teckemeyer, Stephan, 49504 Lotte (DE); Wessels, Thomas, 49080 Osnabrück (DE); Ströbel-Fröschle, Markus, 49124 Georgsmarienhütte (DE)

(57) **Zusammenfassung**

Die Erfindung umfasst eine Sämaschine, insbesondere Einzelkornsämaschine, umfassend zwei oder mehr Dosiervorrichtungen (1), die jeweils eine in einem Gehäuse (11) drehbar gelagerte Fördereinrichtung (12) umfassen, wobei mit Hilfe der Fördereinrichtung (12) Saatgut im Gehäuse (11) von einem Aufnahmebereich (6) in einen Abgabebereich förderbar ist, ein Nachfüllsystem (4) zum Fördern von Saatgut zu den Dosiervorrichtungen (1), und eine Steuervorrichtung, wobei die Steuervorrichtung so ausgebildet ist, dass sie basierend auf den Drehzahlen der Fördereinrichtungen (12) der Dosiervorrichtungen (1) eine durch die Sämaschine pro Fläche und/oder Zeitintervall ausgebrachte Körneranzahl bestimmt und das Nachfüllsystem (4) basierend auf der bestimmten pro Fläche und/oder Zeitintervall ausgebrachten Körneranzahl regelt oder steuert.

## Beschreibung

Die Erfindung betrifft eine Sämaschine, insbesondere eine Einzelkornsämaschine, sowie ein Verfahren zum Betreiben einer solchen Sämaschine.

Um Ertrag und Kosten optimieren zu können, ist es von Bedeutung, dass die Ausbringmenge einer Sämaschine möglichst genau gesteuert oder geregelt werden kann.

Bei bekannten Sämaschinen wird üblicherweise vor dem Beginn der Aussaat eine sogenannte Abdrehprobe durchgeführt. Dadurch lässt sich die von der Sämaschine pro Fläche ausgebrachte Masse an Saatgut recht genau einstellen.

Das Durchführen der Abdrehprobe und das entsprechende Einstellen der Sämaschine auf die gewünschte Ausbringmenge sind jedoch aufwendig. Außerdem wäre es für viele Anwendungen vorteilhafter, die Anzahl der pro Fläche oder Zeiteinheit ausgegebenen Körner zu kennen oder zu verwenden. Diese Größe muss bei bekannten Systemen und Verfahren erst aus der pro Fläche ausgebrachten Masse bestimmt werden, was einen zusätzlichen Aufwand darstellt.

Aufgabe der Erfindung ist es daher, eine Sämaschine, insbesondere eine Einzelkornsämaschine, sowie ein Verfahren zum Betreiben einer solchen Sämaschine, bereitzustellen, welche eine einfachere Regelung oder Steuerung der Ausbringmenge ermöglichen.

Diese Aufgabe wird durch eine Sämaschine gemäß Patentanspruch 1 sowie ein Verfahren gemäß Patentanspruch 4 gelöst. Weitere vorteilhafte Ausgestaltungen der Erfindung sind in den abhängigen Ansprüchen angegeben.

Gemäß der Erfindung ist es also vorgesehen, dass eine Steuervorrichtung der Sämaschine so ausgebildet ist, dass sie basierend auf den Drehzahlen der Fördereinrichtungen der Dosiervorrichtungen eine durch die Sämaschine pro Fläche und/oder Zeitintervall ausgebrachte Anzahl an Körnern des Saatguts (Körneranzahl) bestimmt und ein Nachfüllsystem der Sämaschine basierend auf der bestimmten pro Fläche und/oder Zeitintervall ausgebrachten Körneranzahl regelt oder steuert.

Beispielsweise kann die Menge an Saatgut, die den Dosiervorrichtungen durch das Nachfüllsystem zugeführt wird, im Betrieb so geregelt oder gesteuert werden, dass eine für die pro Fläche und/oder Zeitintervall ausgebrachte Körneranzahl ausreichende Zuführung an Saatgut sichergestellt wird.

Der Erfindung liegt dabei die Erkenntnis zugrunde, dass bei Dosiervorrichtungen, die eine in einem Gehäuse drehbar gelagerte Fördereinrichtung umfassen, mit deren Hilfe Saatgut im Gehäuse von einem Aufnahmebereich in einen Abgabebereich förderbar ist, die ausgebrachte Körneranzahl pro Zeitintervall von der Drehzahl der jeweiligen Fördereinrichtung abhängt. Somit kann durch Berücksichtigung der Drehzahlen, insbesondere aller Fördereinrichtungen, die pro Zeitintervall ausgebrachte Körneranzahl bestimmt werden.

Die pro Zeitintervall ausgebrachte Körneranzahl kann beispielsweise dadurch bestimmt werden, dass die Drehzahl der jeweiligen Fördereinrichtung mit der Anzahl von Körnern des Saatguts multipliziert wird, auf deren Ausbringung die jeweilige Dosiervorrichtung eingestellt oder geregelt ist, und die dadurch pro Dosiervorrichtung und Zeitintervall ausgebrachte Körneranzahl über alle Dosiervorrichtungen der Sämaschine summiert wird.

Es kann auch ein Mittelwert der Drehzahlen der Fördereinrichtungen bestimmt werden und dieser Mittelwert mit der vorherbestimmten Anzahl von Körnern multipliziert werden, auf die die Dosiervorrichtungen eingestellt oder geregelt sind. Dies kann insbesondere dann der Fall sein, wenn alle Dosiervorrichtungen auf dieselbe Anzahl von Körnern eingestellt oder geregelt werden, die pro Zeitintervall ausgebracht werden sollen.

Die pro Fläche ausgebrachte Körneranzahl kann basierend auf der pro Zeitintervall ausgebrachten Körneranzahl bestimmt werden, insbesondere unter Berücksichtigung der Arbeitsbreite der Sämaschine und der Fahrgeschwindigkeit der Sämaschine. Die Fahrgeschwindigkeit der Sämaschine kann insbesondere bei einer sogenannten Nullablage herangezogen werden, wenn das Saatgut also im Zeitpunkt der Ablage dieselbe Geschwindigkeit relativ zum Boden und entgegen der Fahrtrichtung der Sämaschine aufweist, wie die Sämaschine selbst. Falls dies nicht der Fall ist, kann anstelle der Fahrgeschwindigkeit der Sämaschine auch die Geschwindigkeit des Saatguts bei der Ablage und in Fahrtrichtung der Sämaschine herangezogen werden, um die pro Fläche ausgebrachte Körneranzahl zu bestimmen.

Die Dosiervorrichtungen können insbesondere Vereinzelungsvorrichtungen sein. Mit anderen Worten, können die Dosiervorrichtungen das Saatgut vereinzeln, also so eingestellt oder geregelt sein, dass pro Zeitintervall und Dosiervorrichtung genau ein Korn des Saatguts ausgegeben wird. In diesem Fall kann bei der Bestimmung der pro Zeitintervall ausgebrachten Körneranzahl eine Multiplikation mit der Anzahl von Körnern des Saatguts, auf deren Ausbringung die jeweilige Dosiervorrichtung eingestellt oder geregelt ist, unterbleiben.

Die pro Fläche und/oder Zeitintervall ausgebrachte Körneranzahl des Saatguts kann auch als Ausbringmenge bezeichnet werden.

Das Saatgut kann insbesondere Saatgut für Getreide, wie etwa Weizen, Roggen, Gerste, Hafer oder Raps, sein.

Jeder Dosiervorrichtung der Sämaschine kann eine Abgabevorrichtung zugeordnet sein, welche so ausgebildet ist, dass sie das von der Dosiervorrichtung ausgegebene Saatgut auf einer landwirtschaftlichen Fläche ablegen kann. Die Abgabevorrichtung kann beispielsweise ein Säschar umfassen.

Die Steuervorrichtung kann so ausgebildet sein, dass sie die bestimmte pro Fläche und/oder Zeitintervall ausgebrachte Körneranzahl mit einem gewünschten Wert (Sollwert) vergleicht und das Nachfüllsystem basierend auf einem Ergebnis dieses Vergleichs regelt oder steuert. Dadurch kann die Zuführung von Saatgut an die Dosiervorrichtungen entsprechend eingestellt werden, so dass eine erforderliche Erhöhung oder Verringerung der Ausbringmenge möglich wird.

Das Nachfüllsystem kann einen Verteilerkopf und/oder einen Zentraldosierer umfassen. Die bestimmte pro Fläche und/oder Zeitintervall ausgebrachte Körneranzahl kann zur Steuerung des Zentraldosierers und/oder zur Steuerung des Verteilerkopfes verwendet werden. Dadurch ist es möglich, bedarfsgerecht Saatgut an die Dosiervorrichtungen zu fördern.

Als Zentraldosierer kann ein volumetrischer Dosierer bezeichnet werden, welcher den Verteilerkopf speist. Vom Verteilerkopf können einzelne Abgangsleitungen zu den einzelnen Dosiervorrichtungen führen. Über diese Abgangsleitungen kann das Saatgut den Dosiervorrichtungen insbesondere pneumatisch zugeführt werden.

Den Abgangsleitungen des Verteilerkopfs können Absperrelemente zugeordnet sein, die zum Verändern der durchgelassenen Saatgutmenge in unterschiedliche Durchlassstellungen einstellbar sind. Diese Absperrelemente können jeweils eine Verschlussklappe umfassen. Die Durchlassstellung der Absperrelemente, insbesondere die Position der Verschlussklappen, kann basierend auf der bestimmten pro Fläche und/oder Zeitintervall ausgebrachten Körneranzahl geregelt oder gesteuert werden.

Das Nachfüllsystem, insbesondere der Verteilerkopf und/oder der Zentraldosierer, können insbesondere hinsichtlich der Menge an Saatgut geregelt oder gesteuert werden, die durch das Nachfüllsystem an die Dosiervorrichtungen gefördert wird.

Der gewünschte Wert (Sollwert) für die Ausbringmenge kann durch eine Bedienperson vorgegeben werden. Die Steuervorrichtung kann dafür mit einer Eingabevorrichtung verbunden sein, über die eine Bedienperson den gewünschten Wert eingeben kann. Da die Steuervorrichtung basierend auf der bestimmten pro Fläche und/oder Zeitintervall ausgebrachten Körneranzahl arbeitet, kann auch der gewünschte Wert in Form einer pro Fläche und/oder Zeitintervall ausgebrachten Körneranzahl angegeben werden. Dadurch ist die Sämaschine einfacher in der Handhabung. Auf eine Abdrehprobe, wie sie im Stand der Technik erforderlich war, kann verzichtet werden.

Bei der Steuervorrichtung kann es sich insbesondere um den Bordcomputer der Sämaschine handeln.

Die einzelnen Dosiervorrichtungen können jeweils eine Sensoranordnung umfassen, mit der die Größe eines Puffers von Saatgut im Aufnahmebereich und/oder ein von der Größe dieses Puffers abhängiger Parameter bestimmbar ist. Die bestimmte Größe oder der bestimmte Parameter können dann als Führungsgröße für die Drehzahlregelung der Fördereinrichtung Verwendung finden. Dadurch kann eine gleichmäßige Dosierung, insbesondere Vereinzelung, ermöglicht werden und Fehlstellen können weitestgehend reduziert oder sogar vermieden werden.

Unter der "Größe" des Puffers kann hierin jede Angabe verstanden werden, welche proportional zur Anzahl an Körnern des Saatguts im Aufnahmebereich ist. Beispielsweise kann die Größe des Puffers die räumliche Ausdehnung des Puffers in wenigstens einer Richtung angeben. Alternativ oder zusätzlich kann die Größe des Puffers auch die Masse und/oder Anzahl an Körnern des Saatguts im Aufnahmebereich angeben.

Mit Hilfe der Sensoranordnung kann beispielsweise die Ausdehnung des Puffers in wenigstens einer Richtung, insbesondere in radialer Richtung, bestimmbar sein. Dadurch, dass die Fördereinrichtung im Betrieb der Dosiervorrichtung rotiert, ist die auf diese Drehbewegung bezogene radiale Ausdehnung des Puffers besonders bedeutend für die Frage, ob ausreichend Saatgut im Aufnahmebereich für die Fördereinrichtung vorgesehen ist. Mit der Sensoreinrichtung kann die Ausdehnung des Puffers auch in mehreren Richtungen, insbesondere in zwei oder drei Richtungen, bestimmbar sein. Dadurch sind noch genauere Aussagen über die Puffergröße möglich.

Alternativ oder zusätzlich kann mithilfe der Sensoranordnung eine Kraft bestimmbar sein, die Körner des Puffers auf eine Wandung des Gehäuses oder ein Prallelement ausüben. Aus der Größe dieser Kraft kann auf die Größe, insbesondere die Masse, des Puffers geschlossen werden.

Die Sensoreinrichtung kann einen oder mehrere kapazitive Sensoren und/oder wenigstens ein Piezoelement umfassen. Mit derartigen Sensoren ist eine besonders effektive Bestimmung der Größe des Puffers und/oder eines von der Größe des Puffers abhängigen Parameters möglich.

Die Drehzahl der Fördereinrichtung kann basierend auf der bestimmten Größe des Puffers und/oder dem von der Größe des Puffers abhängigen Parameter gesteuert oder geregelt werden. Dadurch kann eine optimale Dosierung oder Vergleichmäßigung des Saatguts erreicht werden.

Insbesondere kann die Drehzahl verringert werden, wenn die Größe des Puffers zu gering ist. Dadurch können Fehlstellen reduziert oder vermieden werden. Entsprechend kann die Drehzahl erhöht werden, wenn ein zu großer Puffer vorliegt. Dadurch können Doppel- und/oder Mehrfachstellen reduziert oder vermieden werden.

Die Dosiervorrichtung kann dafür insbesondere einen Motor oder Antrieb zum Antreiben der Fördereinrichtung umfassen, der hinsichtlich seiner Drehzahl regelbar oder steuerbar ist.

Die Dosiervorrichtung, insbesondere die Fördereinrichtung, kann einen Zentrierschieber umfassen, der Saatgut entlang einer Führungsfläche eines Führungselements von einem Aufnahmebereich in einen Abgabebereich schiebt und dabei ein Korn zentriert, indem er es beidseitig abstützt oder führt. Nicht zentrierte Körner, die im Aufnahmebereich aufgenommen und entlang der Führungsfläche transportiert werden, können infolge ausgesondert werden, sodass im Abgabebereich das zentrierte Korn verbleibt und an ein Abgabeelement zur Ablage auf einer landwirtschaftlichen Fläche weitergeleitet werden kann. Insbesondere kann genau ein Korn durch den Zentrierschieber zentriert geführt werden. Die Dosiervorrichtung kann also eine Vereinzelungsvorrichtung sein.

Die Angabe "beidseitig abstützt oder führt" bedeutet, dass der Zentrierschieber Elemente umfasst, welche das zentrierte Korn an beiden Seiten (auf die Drehrichtung des Zentrierschiebers bezogen) abstützen oder führen. Damit kann eine Bewegung des Korns quer zur Drehrichtung reduziert oder vermieden werden, sodass das zentrierte Korn im Wesentlichen entlang einer vorbestimmten Bewegungsbahn vom Aufnahmebereich in den Abgabebereich geschoben wird. Um das Korn seitlich zu führen ist es nicht erforderlich, dass der Zentrierschieber stets in direktem Kontakt mit dem Korn steht. Es ist ausreichend, wenn der Zentrierschieber verhindert, dass das Korn einen vorherbestimmten seitlich begrenzten Bereich verlässt.

Als Drehrichtung wird die Bewegungsrichtung bezeichnet, in der sich der Zentrierschieber im Betrieb der Dosiervorrichtung bewegt. Mit anderen Worten bezeichnet die Drehrichtung die Richtung der Vorwärtsbewegung des Zentrierschiebers. Wenn sich der Zentrierschieber entlang einer Kreisbahn bewegt, ist die Bewegungsrichtung an jedem Punkt der Kreisbahn tangential zu dieser. Die Angaben "seitlich" oder "beidseitig" beziehen sich daher auf die Bereiche quer zur Drehrichtung.

Die Angabe "wenigstens teilweise" bedeutet in diesem Zusammenhang, dass der Zentrierschieber das Korn nicht durchgehend vom Aufnahmebereich bis zum Abgabebereich beidseitig abstützen oder führen muss. Beispielsweise kann es Zeit in Anspruch nehmen, bis sich das Korn so relativ zum Zentrierschieber ausgerichtet hat, dass eine beidseitige Abstützung oder Führung möglich ist. Während dieser Zeit kann das Korn bereits einen gewissen Weg vom Aufnahmebereich zum Abgabebereich bewegt werden. Das Korn kann aber auch entlang des gesamten Wegs beidseitig abgestützt oder geführt werden.

Der Zentrierschieber kann auch ein oder mehrere Elemente umfassen, welche das zentrierte Korn in Drehrichtung gesehen nach hinten abstützen. Die Elemente, welche die seitliche Abstützung oder Führung bewirken können zugleich auch die Abstützung nach hinten gewährleisten.

Der Zentrierschieber kann so drehbar in dem Gehäuse gelagert sein, dass er entlang einer Kreisbahn bewegbar ist, wobei das Führungselement wenigstens teilweise entlang der Kreisbahn verläuft, und wobei die Breite der Führungsfläche vom Aufnahmebereich zum Abgabebereich hin abnimmt.

Durch die abnehmende Breite der Führungsfläche können die Körner, welche nicht durch den Zentrierschieber zentriert werden, im Laufe der Bewegung vom Aufnahmebereich in den Abgabebereich aufgrund der wegfallenden Stütze durch die Führungsfläche unter Zentrifugalkrafteinflüssen und/oder Schwerkrafteinflüssen ausgesondert werden. Diese können zur erneuten Förderung in den Aufnahmebereich zurückgeführt werden, insbesondere durch Trägheit und/oder unter Schwerkrafteinfluss. Auch die Breite des Führungselements insgesamt kann vom Aufnahmebereich zum Abgabebereich hin abnehmen.

Der Zentrierschieber kann so im Gehäuse gelagert sein, dass die Kreisbahn im Betrieb der Dosiervorrichtung im Wesentlichen vertikal verläuft. Mit anderen Worten kann die Drehachse, um die der Zentrierschieber rotiert, horizontal verlaufen, insbesondere im Betrieb parallel zum zu bearbeitenden Boden. Insbesondere kann die Drehachse mit der Horizontalen einen Winkel zwischen 0° und 10°, insbesondere zwischen 0° und 5°, einschließen.

Das Führungselement kann insbesondere radial außerhalb der Kreisbahn verlaufen. Mit anderen Worten kann das Führungselement die Kreisbahn wenigstens teilweise radial umgeben oder begrenzen. Das Führungselement kann insbesondere annähernd tangential entlang bestimmten Abschnitten der Kreisbahn verlaufen, insbesondere im Abschnitt der Kreisbahn zwischen dem Aufnahmebereich und dem Abgabebereich.

Die Kreisbahn kann insbesondere durch ein äußerstes Ende oder eine Spitze des Zentrierschiebers überstrichen werden. Mit anderen Worten kann die Kreisbahn einen Radius aufweisen, der der Länge des Zentrierschiebers entspricht. Die Länge des Zentrierschiebers kann der maximalen radialen Erstreckung des Zentrierschiebers ausgehend von der Drehachse entsprechen.

Der Aufnahmebereich kann ein bestimmtes Kreissegment der Kreisbahn des Zentrierschiebers umfassen.

Im Abgabebereich kann die Stützwirkung des Führungselementes entfallen oder der Verlauf des Führungselementes sich derart ändern, dass das wenigstens eine Korn durch Fliehkraft in die Auslassöffnung gefördert wird.

Als Führungsfläche des Führungselements wird hierin die für die Förderung des Saatguts vom Aufnahmebereich in den Abgabebereich wirksame Fläche des Führungselements bezeichnet. Mit anderen Worten entspricht die Führungsfläche des Führungselements der Oberfläche des Führungselements, auf der Körner des Saatguts bei der Förderung von dem Aufnahmebereich in den Abgabebereich hin bewegt werden. Aufgrund der Bewegung entlang der Kreisbahn wird das Saatgut durch Fliehkraft gegen die Führungsfläche des Führungselements gedrückt. Die Führungsfläche des Führungselements dient daher als Stütze für das Saatgut entgegen der Fliehkraft. Alternativ oder zusätzlich können die Körner auch durch die Schwerkraft gegen die Führungsfläche gedrückt werden. Dies kann insbesondere dann der Fall sein, wenn sich der Zentrierschieber gemäß einer Alternative nicht entlang einer Kreisbahn um die Drehachse bewegt, sondern entlang einer Bahn, die wenigstens teilweise parallel zur Horizontalen verläuft.

Wenn die Breite der Führungsfläche abnimmt geht diese Stützwirkung, wie oben erwähnt, für bestimmte Körner des Saatguts verloren, weshalb diese nicht weiter zum Abgabebereich hin gefördert werden können, sondern ausgesondert werden.

Die Breite der Führungsfläche kann vom Aufnahmebereich zum Abgabebereich hin kontinuierlich abnehmen. Dadurch können überschüssige Körner sukzessive ausgesondert werden. Diese werden dann sukzessive an den Aufnahmebereich zurückgeführt, sodass ein ausreichendes Reservoir von Saatgut im Aufnahmebereich bereitgestellt werden kann, selbst wenn über die Zufuhrleitung temporär zu wenig Saatgut zugeführt wird. Die Breite der Führungsfläche kann jedoch auch diskontinuierlich abnehmen.

Als Breite der Führungsfläche kann insbesondere die Ausdehnung der Führungsfläche quer zur Kreisbahn bezeichnet werden. Die Richtung quer zur Kreisbahn bezeichnet hierin eine Richtung, die an jedem Punkt der Kreisbahn senkrecht zur Tangente und senkrecht zum Radius der Kreisbahn verläuft. Die Ausdehnung der Führungsfläche in dieser Richtung wird entlang der, gegebenenfalls konturierten, Führungsfläche bestimmt.

Das Führungselement kann eine Vertiefung aufweisen, in die der Zentrierschieber wenigstens teilweise eingreift, wobei die Tiefe der Vertiefung entlang der Kreisbahn des Vereinzelungsschiebers vom Aufnahmebereich zum Abgabebereich hin abnimmt. Durch die Vertiefung im Aufnahmebereich ist es möglich, dass zuverlässig Saatgut durch den Zentrierschieber aufgenommen und entlang der Führungsfläche bewegt werden kann. Durch die abnehmende Tiefe der Vertiefung entlang der Kreisbahn kann wiederum eine Aussonderung überschüssiger Körner des Saatguts bewirkt werden. Die Abnahme der Tiefe geht mit einer Abnahme der Breite der Führungsfläche einher.

Die Vertiefung im Führungselement kann insbesondere einer Nut oder Kerbe entsprechen. Die Nut oder Kerbe kann insbesondere V-förmig ausgebildet sein.

Das Führungselement kann im Abgabebereich einen in Drehrichtung verlaufenden Grat aufweisen. Durch einen solchen Grat wird eine Vereinzelung des Saatguts weiter gefördert, da entlang des Grats üblicherweise nur ein Korn stabil bewegt werden kann, nämlich das Korn, welches wenigstens teilweise durch den Zentrierschieber zentriert wird. Die vorherbestimmte Bahn entlang der Führungsfläche, entlang der der Zentrierschieber ein Korn zentriert bewegt, kann insbesondere entlang des Grats verlaufen.

Beidseitig des Führungselements kann ein Sammelraum für im Laufe des Transports vom Aufnahmebereich zum Abgabebereich ausgesonderte Körner des Saatguts angeordnet sein, der mit dem Aufnahmebereich verbunden ist. Dadurch können ausgesonderte Körner wieder für den erneuten Transport vom Aufnahmebereich in den Abgabebereich bereitgestellt werden. Der Sammelraum kann durch die Wandung des Gehäuses begrenzt werden.

Das Führungselement kann an einer Innenfläche des Gehäuses angeordnet sein, welche den Raum, in dem der Zentrierschieber im Betrieb rotiert, radial begrenzt. Mit anderen Worten kann das Gehäuse im Wesentlichen zylindrisch ausgebildet sein, wobei das Führungselement an der Mantelfläche des Gehäuses angeordnet ist.

Das Führungselement kann Teil der Innenfläche des Gehäuses sein. Alternativ kann das Führungselement zerstörungsfrei lösbar oder nicht zerstörungsfrei lösbar mit der Innenfläche des Gehäuses verbunden sein. Beispielsweise kann das Führungselement an das Gehäuse angeschweißt sein.

Das Führungselement und der Zentrierschieber können in einer gemeinsamen Ebene angeordnet sein, wobei das Führungselement und der Zentrierschieber bezüglich dieser Ebene symmetrisch ausgebildet sind. Die gemeinsame Ebene kann insbesondere eine Rotationsebene des Zentrierschiebers sein.

Falls das Führungselement eine Vertiefung aufweist, können die Punkte mit der größten Tiefe in der gemeinsamen Ebene liegen.

Falls das Führungselement einen Grat aufweist, kann dieser ebenfalls in der gemeinsamen Ebene liegen.

Die Dosiervorrichtung kann wenigstens einen weiteren Zentrierschieber umfassen. Dieser kann eines oder mehrere Merkmale des oben genannten Zentrierschiebers aufweisen. Insbesondere kann der wenigstens eine weitere Zentrierschieber so drehbar im Gehäuse gelagert sein, dass er entlang der Kreisbahn bewegbar ist. Mit anderen Worten kann der weitere Zentrierschieber in Umfangsrichtung versetzt zum oben beschriebenen Zentrierschieber angeordnet sein und dem oben beschriebenen Zentrierschieber nachlaufend entlang der Kreisbahn bewegbar sein.

Der Zentrierschieber und der wenigstens eine weitere Zentrierschieber können miteinander verbunden sein, insbesondere starr miteinander verbunden sein.

Der Zentrierschieber und der wenigstens eine weitere Zentrierschieber können an einer gemeinsamen rotierenden Scheibe oder einem gemeinsam rotierenden Ring angeordnet sein.

Der Zentrierschieber und der wenigstens eine weitere Zentrierschieber können ein die Zentrierwirkung des Zentrierschiebers erzeugendes Element aufweisen. Dieses Element kann insbesondere so ausgebildet sein, dass ein Korn des Saatguts beidseitig stützbar oder führbar ist. Das Element kann nach vorne hin (in Drehrichtung) offen sein. Mit anderen Worten kann eine Abstützung des Korns nach vorne hin unterbleiben.

Der Zentrierschieber kann insbesondere eine in Drehrichtung offene Nut oder Kerbe zur Aufnahme eines Korn des Saatguts umfassen. Die Nut oder Kerbe kann auch in Richtung der Führungsfläche offen sein. Die Größe der Nut kann so gewählt sein, dass sich maximal ein Korn ganz oder teilweise in der Nut anordnen kann.

Die Nut kann insbesondere konisch oder V-förmig ausgebildet sein. Die Nut kann insbesondere bezüglich der oben genannten gemeinsamen Ebene des

Führungselements und des Zentrierschiebers symmetrisch ausgebildet sein. Eine korrespondierende Vertiefung im Führungselement kann ebenfalls symmetrisch bezüglich dieser Ebene ausgebildet sein. Diese Symmetrie erlaubt insbesondere ein beidseitiges Absondern von überschüssigen Körnern in den umgebenden Sammelraum.

In einer alternativen Ausführungsform kann der Zentrierschieber mehrere in Richtung des Führungselements weisende Borsten aufweisen. Wenn die Breite der Führungsfläche zum Abgabebereich hin abnimmt, werden äußere Borsten nicht mehr entlang der Führungsfläche bewegt und können sich infolge der Fliehkraftwirkung aufstellen. Damit können diese Borsten ein Korn des Saatguts seitlich führen. Nachlaufende Borsten können das Korn in Drehrichtung gesehen nach hinten abstützen. Mit anderen Worten kann sich auch bei einem Borsten umfassenden Zentrierschieber eine konische oder V-förmige Zentrierfläche für ein Korn ausbilden.

Das die Zentrierwirkung des Zentrierschiebers erzeugende Element des Zentrierschiebers kann insbesondere am äußersten Ende oder an der Spitze des Zentrierschiebers angeordnet sein.

Das Zentrierelement kann austauschbar sein. Beispielsweise kann eine die oben genannte Nut des Zentrierschiebers umfassende Spitze des Zentrierschiebers auswechselbar sein. Dadurch kann eine gewisse Anpassung oder Optimierung hinsichtlich der Korngrößen erzielt werden.

Die Dosiervorrichtung kann wenigstens ein Störelement umfassen, welches so ausgebildet ist, dass Körner des Saatguts, die nicht durch den Zentrierschieber zentriert werden unter Einfluss des Störelements ihre Lage ändern oder vom Transport zum Abgabebereich hin ausgesondert werden. Ein derartiges Störelement begünstigt die Aussonderung überschüssiger Körner und somit die Vereinzelung des Saatguts.

Das Störelement kann beispielsweise eine Druckluftdüse umfassen.

Es kann also wenigstens eine Druckluftdüse vorgesehen und so angeordnet sein, dass Druckluft auf Saatgut gerichtet werden kann, welches durch den

Zentrierschieber entlang der Führungsfläche des Führungselements geschoben wird. Diese Druckluft kann eine Störung für Körner des Saatguts darstellen, welche nicht durch den Zentrierschieber zentriert geführt werden. Dadurch kann die Aussonderung von überschüssigen Körnern unterstützt werden. Dies kann auch eine zuverlässigere Vereinzelung des Saatguts ermöglichen.

Die Druckluftdüse kann in das Führungselement integriert sein, und insbesondere eine Luftausströmöffnung umfassen, die in der Führungsfläche angeordnet ist. Dadurch ist eine besonders effiziente Störung überschüssiger Körner möglich.

Alternativ oder zusätzlich ist es auch denkbar, eine mit Druckluft beaufschlagbare Scheibe vorzusehen, die gemeinsam mit dem Zentrierschieber rotiert und wenigstens eine Öffnung aufweist, die im Bereich des Zentrierschiebers angeordnet ist. Diese mitlaufende Öffnung kann in Drehrichtung gesehen insbesondere stromabwärts des Zentrierschiebers angeordnet sein, also vorlaufen.

Durch die Druckluftdüse kann Druckluft in radialer und/oder axialer Richtung ausgegeben werden.

Das Störelement kann alternativ oder zusätzlich ein geometrisches Störelement sein. Mit anderen Worten kann das wenigstens eine Störelement einer lokalen Änderung der Geometrie der Führungsfläche des Führungselements entsprechen. Insbesondere kann das wenigstens eine Störelement eine veränderte Neigung der Führungsfläche umfassen. Im Bereich des Störelements kann sich die Geometrie der Führungsfläche insbesondere diskontinuierlich ändern.

Alternativ kann die Dosiervorrichtung wie in der DE 10 2012 105 048 A1 beschrieben ausgebildet sein. An die drehbar gelagerte Fördereinrichtung kann also annähernd tangential eine Innenmantelfläche des Gehäuses anschließen. Die Fördereinrichtung kann mit Taschen zusammenwirken, in denen Körner des Saatguts gedrängt und kreisförmig befördert werden, bis in einem vorherbestimmten Gehäusebereich durch eine veränderte Kontur der Innenmantelfläche des Gehäuses und unter Zentrifugalkrafteinflüssen nur jeweils ein einzelnes Korn in der Tasche verbleibt, während überschüssige Körner abgesondert und zur erneuten Förderung in einen ersten Gehäusebereich zurückgeführt werden.

Die Erfindung stellt außerdem ein Verfahren gemäß Anspruch 4 bereit.

Das Verfahren kann insbesondere mit einer oben beschriebenen Sämaschine durchgeführt werden. Das Verfahren kann daher ein Bereitstellen einer oben beschriebenen Sämaschine umfassen.

Die in Zusammenhang mit der Sämaschine beschriebenen Merkmale und Vorteile können auf das Verfahren entsprechend angewendet werden.

Weitere Merkmale und Vorteile der Erfindung werden nachfolgend anhand der beispielhaften Figuren erläutert. Dabei zeigen:
- Figur 1: den schematischen Aufbau einer beispielhaften Sämaschine;
- Figur 2: ein Flussdiagramm eines beispielhaften Verfahrens zum Betreiben einer Sämaschine; und
- Figur 3: einen Querschnitt durch eine beispielhafte Dosiervorrichtung einer Sämaschine.

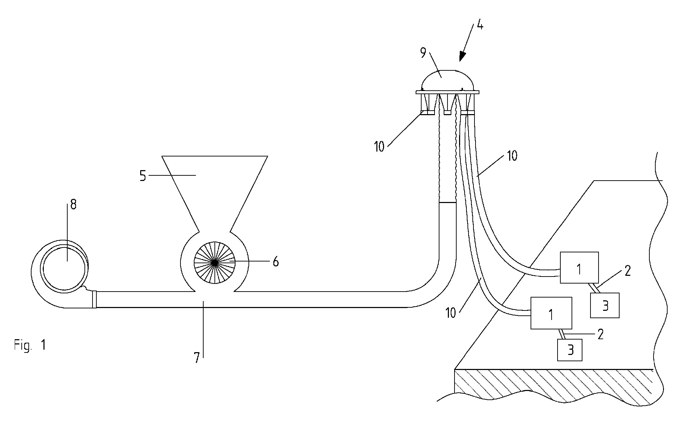

Figur 1 zeigt eine schematische Darstellung einer beispielhaften Sämaschine mit in diesem Beispiel zwei Dosiervorrichtungen 1, die in Fahrtrichtung gesehen nebeneinander in einer Reihe angeordnet sind. Natürlich können noch weitere gleichartige Dosiervorrichtungen vorgesehen sein. Jede der Dosiervorrichtungen 1 umfasst eine hier nicht dargestellte drehbar gelagerte Fördereinrichtung, mit Hilfe derer Saatgut von einem Aufnahmebereich in einen Abgabebereich im Gehäuse der Dosiervorrichtung 1 förderbar ist.

Die Fördereinrichtung kann mit der Gehäusewandung oder dem Führungselement insbesondere so zusammenwirken, dass die Anzahl der geförderten Körner des Saatguts vom Aufnahmebereich zum Abgabebereich hin abnimmt. Die Dosiervorrichtung kann insbesondere eine Vereinzelungsvorrichtung sein.

An den Abgabebereich schließt eine Verbindungsleitung 2 an, welche die Dosiervorrichtungen 1 jeweils mit einer Abgabevorrichtung 3 verbindet. Die Abgabevorrichtungen 3 sind so ausgebildet, dass sie das von den Dosiervorrichtungen 1 dosierte Saatgut auf einer landwirtschaftlichen Fläche ablegen. Die Abgabevorrichtungen 3 können insbesondere Säschare umfassen oder solchen entsprechen.

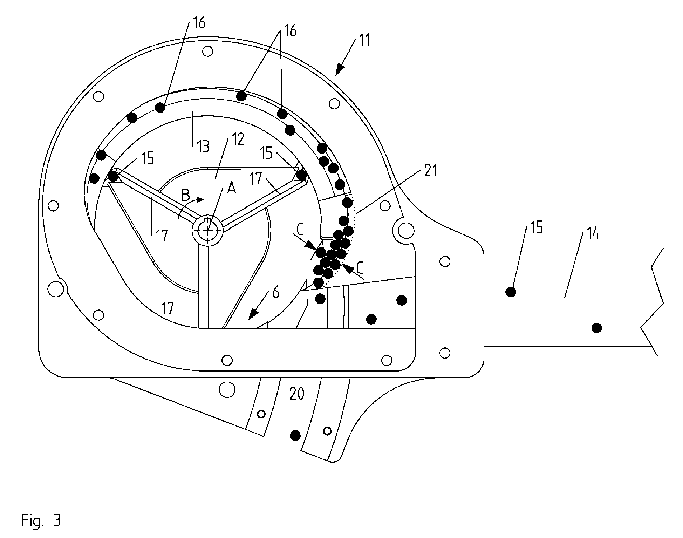

Details zu einer beispielhaften Dosiervorrichtung werden nachfolgend in Zusammenhang mit Figur 3 noch angegeben.

Im Folgenden wird angenommen, dass die Dosiervorrichtungen 1 als Vereinzelungsvorrichtungen wirken, das ihnen zugeführte Saatgut also vereinzeln und damit pro Zeiteinheit ein einzelnes Korn an die Abgabevorrichtungen 3 abgeben. Dadurch ist es möglich, mit vorgegebenem Abstand einzelne Körner auf der landwirtschaftlichen Fläche abzulegen.

Es ist aber auch möglich, dass die Dosiervorrichtungen 1 eine andere vorherbestimmte Menge an Körnern des Saatguts pro Zeiteinheit an die Abgabevorrichtungen 3 übergeben.

Ebenfalls in Figur 1 schematisch dargestellt ist ein Nachfüllsystem 4 zum Fördern von Saatgut zu den Dosiervorrichtungen 1. Dieses Nachfüllystem 4 umfasst einen zentralen Vorratsbehälter 5, in dem Saatgut bereitgestellt werden kann. Über einen Zentraldosierer 6 kann Saatgut von dem zentralen Vorratsbehälter 5 vordosiert in eine pneumatische Förderleitung 7 eingebracht werden. Mit dem Zentraldosierer 6 ist nur eine volumetrische Vordosierung möglich, während die Dosiervorrichtungen 1 eine höhere Genauigkeit bei der Dosierung erzielen.

Die pneumatische Förderleitung 7 wird mittels eines Gebläses 8 mit einem Überdruck beaufschlagt, wodurch eine Förderluftströmung entsteht, mit der Saatgut in einen Verteilerkopf 9 förderbar ist. Von diesem Verteilerkopf 9 führen Abgangsleitungen 10 zu den einzelnen Dosiervorrichtungen 1.

Eine in Figur 1 nicht dargestellte Steuervorrichtung kann so ausgebildet sein, dass sie die Drehzahlen der Fördereinrichtungen der einzelnen Dosiervorrichtungen 1 verwendet, um eine durch die Sämaschine pro Fläche und/oder Zeitintervall ausgebrachte Körneranzahl zu bestimmen. Zur Bestimmung der Drehzahlen können entsprechende Sensoren in den Dosiervorrichtungen 1 vorgesehen sein, die wiederum entsprechende Messsignale an die Steuervorrichtung übermitteln. Für die Übermittlung der Messsignale können nicht dargestellte Datenleitungen vorgesehen sein.

Basierend auf der bestimmten pro Fläche und/oder Zeitintervall ausgebrachten Körneranzahl regelt oder steuert die Steuervorrichtung das Nachfüllsystem 4, insbesondere den Zentraldosierer 6 und/oder den Verteilerkopf 9.

Dadurch kann die Nachförderung von Saatgut durch das Nachfüllsystem 4 an die Dosiervorrichtungen 1 entsprechend dem Bedarf der Dosiervorrichtungen 1 gesteuert oder geregelt werden. Dadurch wiederum kann wenigstens weitestgehend vermieden werden, dass in den Dosiervorrichtungen 1 ein zu großer oder zu kleiner Körnerpuffer des Saatguts entsteht, was zu Mehrfachstellen bzw. Fehlstellen bei der Ablage auf der landwirtschaftlichen Fläche führen kann.

Die Steuervorrichtung kann das Nachfüllsystem 4 also insbesondere hinsichtlich der Menge des Saatguts steuern, welches an die Dosiervorrichtungen 1 gefördert wird.

Beispielsweise kann die Drehzahl des volumetrischen Zentraldosierers 6 geregelt oder gesteuert werden. Alternativ oder zusätzlich können in den Abgangsleitungen 10 Absperrelemente vorgesehen sein, die zum Verändern der durchgelassenen Saatgutmenge in unterschiedliche Durchlassstellungen einstellbar sind. Diese Durchlassstellung kann jeweils auf Basis der bestimmten pro Fläche und/oder Zeitintervall ausgebrachten Körneranzahl geregelt oder gesteuert werden.

Es kann auch ein Mittelwert der Drehzahlen der Fördereinrichtungen der Dosiervorrichtungen 1 als Grundlage der Berechnung herangezogen werden.

Die Steuervorrichtung kann insbesondere so ausgebildet sein, dass sie die bestimmte pro Fläche und/oder Zeitintervall ausgebrachte Körneranzahl mit einem gewünschten Wert (Sollwert) vergleicht und das Nachfüllsystem 4 basierend auf einem Ergebnis dieses Vergleichs regelt oder steuert. Dies kann insbesondere dann geschehen, wenn die Drehzahl der Fördereinrichtungen jeweils basierend auf dem zur Verfügung stehenden Saatgut gesteuert oder geregelt wird, also basierend auf der Größe des Körnerpuffers in den Dosiervorrichtungen 1. Durch Steuerung und/oder Regelung des Nachfüllsystems, insbesondere der Menge an Saatgut, welche durch das Nachfüllsystem 4 bereitgestellt wird, kann der Körnerpuffer in den Dosiervorrichtungen 1 beeinflusst werden. Dadurch können wiederum die Drehzahlen der Fördereinrichtungen beeinflusst werden, was wiederum die pro Fläche und/oder Zeitintervall ausgebrachte Körneranzahl beeinflusst.

Das System kann somit weitestgehend selbstregelnd ausgebildet werden. Auf aufwändige Interaktionen mit der Bedienperson, beispielsweise über eine Abdrehprobe, kann verzichtet werden.

Die Bedienperson kann jedoch einen Sollwert über eine Eingabevorrichtung vorgeben, welche mit der Steuervorrichtung verbunden ist.

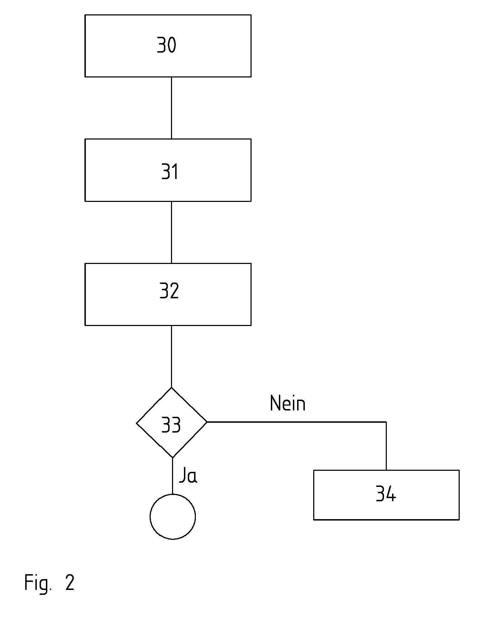

Figur 2 zeigt ein vereinfachtes Flussdiagramm eines beispielhaften Verfahrens zum Betreiben einer Sämaschine. Dieses Verfahren kann insbesondere durch eine Steuervorrichtung der Sämaschine durchgeführt werden. Bei dieser Steuervorrichtung kann es sich insbesondere um den Bordcomputer der Sämaschine handeln.

In Schritt 30 bestimmt die Steuervorrichtung zunächst die Drehzahlen der einzelnen Fördereinrichtungen der Dosiervorrichtungen 1. Dies kann basierend auf Messsignalen von entsprechenden Sensoren in den Dosiervorrichtungen 1 durchgeführt werden.

In Schritt 31 bildet die Steuervorrichtung dann einen Mittelwert der Drehzahlen aller Fördereinrichtungen und bestimmt daraus in Schritt 32 die pro Zeitintervall ausgebrachte Körneranzahl. Dafür multipliziert die Steuervorrichtung den in Schritt 31 errechneten Mittelwert mit der Anzahl von Körnern, die durch die Dosiervorrichtungen 1 pro Zeiteinheit ausgebracht werden sollen, auf welche die Dosiervorrichtungen 1 also eingestellt oder geregelt sind. Falls die Dosiervorrichtungen 1 als Vereinzelungsvorrichtungen arbeiten, ist diese Zahl 1 und die oben genannte Multiplikation kann damit unterbleiben. Um die durch die Sämaschine pro Zeitintervall ausgebrachte Körneranzahl zu erhalten, wird der Mittelwert der Drehzahlen, gegebenenfalls multipliziert mit der Anzahl der Körner, welche die einzelnen Dosiervorrichtungen pro Zeitintervall ausgeben, noch mit der Anzahl an Dosiervorrichtungen multipliziert.

Optional kann in Schritt 32 auch die pro Fläche ausgebrachte Körnerzahl bestimmt werden, indem die pro Zeitintervall ausgebrachte Körneranzahl mit der Arbeitsbreite der Sämaschine und dem Weg, den die Sämaschine im Zeitintervall zurücklegt, multipliziert wird. Für den Weg, den die Sämaschine innerhalb des Zeitintervalls zurücklegt, kann die Fahrgeschwindigkeit der Sämaschine herangezogen werden, welche durch einen bekannten Sensor bestimmbar und an die Steuervorrichtung übermittelbar ist.

In Schritt 33 vergleicht die Steuervorrichtung die in Schritt 32 errechnete Größe mit einem Sollwert. Stimmen die Größen innerhalb eines vorgegebenen Toleranzbereiches überein, kann das Verfahren beendet werden, andernfalls steuert oder regelt die Steuervorrichtung in Schritt 34 das Nachfüllsystem, insbesondere die Drehzahl des Zentraldosierers und/oder Stellungen von Absperrelementen des Verteilerkopfs basierend auf dem Ergebnis des Vergleichs. Wenn beispielsweise die Ausbringmenge zu gering ist, kann die Menge von Saatgut, die durch das Nachfüllsystem 4 an die Dosiervorrichtungen 1 gefördert wird erhöht werden, andernfalls, wenn die Ausbringmenge zu hoch ist, kann die durch das Nachfüllystem 4 geförderte Menge reduziert werden.

Das Verfahren kann mehrfach durchgeführt werden, insbesondere zu vorherbestimmten Zeitpunkten oder innerhalb vorgegebener Zeitintervalle. Das Verfahren kann auch kontinuierlich durchgeführt werden. In diesem Fall kehrt das Verfahren nach Schritt 33 bzw. 34 wieder zu Schritt 30 zurück.

Figur 3 zeigt einen Querschnitt durch eine beispielhafte Dosiervorrichtung 1, wie sie in einer Sämaschine wie oben beschrieben Anwendung finden kann.

Die Dosiervorrichtung umfasst ein Gehäuse 11, in dem in diesem Beispiel eine drehbar gelagerte Fördereinrichtung 12 angeordnet ist. Die Fördereinrichtung 12 dreht im Betrieb um eine Querachse A, die in diesem Beispiel senkrecht zur Bildebene verläuft. Die Drehrichtung der Fördereinrichtung 12 im Betrieb ist durch einen Pfeil B angedeutet.

Ein nicht dargestellter Motor oder Antrieb ist vorgesehen, um die Fördereinrichtung 12 anzutreiben. Eine Antriebswelle des Motors oder Antriebs kann entlang der Drehachse A verlaufen. Der Motor oder Antrieb ist hinsichtlich seiner Drehzahl regelbar oder steuerbar.

Die Dosiervorrichtung kann so ausgebildet sein, dass die Fördereinrichtung mit einer Frequenz zwischen 5 Hz und 60 Hz rotiert. Durch eine Ausbildung der Fördereinrichtung mit beispielsweise drei Mitnehmern 17, wird so eine Vereinzelungsfrequenz von 15 Hz bis 180 Hz ermöglicht. Dadurch können sehr geringe Abstände zwischen den abgelegten Körnern erzielt werden.

Die Fördereinrichtung 12 umfasst in diesem Beispiel drei Mitnehmer 17, welche sich entlang einer Kreisbahn bewegen, deren Radius der Länge der Mitnehmer 17 entspricht.

Über eine Zufuhrleitung 14 werden Körner 15 des Saatguts in einen Aufnahmebereich 6 im Gehäuse 11 transportiert. Die Zuführleitung 14 kann über einen nicht gezeigten Verteilerkopf in Verbindung mit einem Zentraldosierer mit dem Saatgut gespeist werden.

Entlang der Kreisbahn ist in diesem Beispiel wenigstens teilweise ein Führungselement 13 angeordnet, das die Mitnehmer 17 bei ihrer Drehbewegung teilweise überstreichen. Die Mitnehmer 17 und das Führungselement 13 wirken so zusammen, dass im Betrieb der Dosiervorrichtung granulares Material durch die Mitnehmer 17 entlang einer Führungsfläche des Führungselements 13 von dem Aufnahmebereich 6 in den Abgabebereich geschoben wird.

Im Abgabebereich ist eine Auslassöffnung vorgesehen, über die das Saatgut aus dem Gehäuse 11 ausgeschleust werden kann. Das so ausgeschleusten Saatgut kann beispielsweise an eine Abgabevorrichtung geleitet werden, welche das granulare Material auf einer landwirtschaftlichen Fläche ablegt (siehe Figur 1). Die Abgabevorrichtung kann beispielsweise ein Säschar umfassen. Der Kanal 20, welcher die Abgabevorrichtung mit der Dosiervorrichtung verbindet, ist in Figur 3 angedeutet.

Die hier gezeigten Mitnehmer 17 agieren als Zentrierschieber, welche das Saatgut entlang einer Führungsfläche des Führungselements 13 vor sich herschieben und im Wesentlichen nur ein einzelnes Korn 19 seitlich abstützen und damit zentrieren. Die Breite der Führungsfläche des Führungselements 13 nimmt in diesem Beispiel vom Aufnahmebereich 6 zum Abgabebereich hin ab. Dadurch werden kontinuierlich Körner des Saatguts, die anfänglich durch die Zentrierschieber 17 entlang der Führungsfläche geschoben wurden, ausgesondert. Nur das jeweils durch die Zentrierschieber 17 zentrierte Korn 19 verbleibt auf der Führungsbahn entlang der Führungsfläche und wird im Abgabebereich über die Auslassöffnung aus dem Gehäuse 11 ausgebracht. Ausgesonderte Körner 16 sind beispielhaft in Figur 3 angedeutet.

Die ausgesonderten Körner 16 gelangen in einen Sammelraum, welcher das Führungselement 13 umgibt. Aufgrund ihrer Trägheit bewegen sich die ausgesonderten Körner 16 weiter entlang einer Kreisbahn im Sammelraum. Der Sammelraum umfasst eine Begrenzungswandung, welche den Raum, in dem der Mitnehmer im Betrieb rotiert, radial begrenzt. Die Begrenzungswandung umfasst wenigstens teilweise die Innenmantelfläche des Gehäuses 11.

In einem Bereich vor oder stromaufwärts des Aufnahmebereichs 6 umfasst die Begrenzungswandung Abbremsmittel 21 zum Abbremsen ausgesonderter Körner 16 des Saatguts.

Die Abbremsmittel 21 umfassen in diesem Beispiel insbesondere eine Oberfläche der Begrenzungswandung, deren Krümmung gegenüber den übrigen Oberflächenbereichen der Begrenzungswandung erhöht ist. Der Oberflächenbereich mit erhöhter Krümmung ist in diesem Beispiel punktiert dargestellt. Der Oberflächenbereich kann in den Aufnahmebereich 6 hineinreichen.

Der Krümmungsradius der Oberfläche der Begrenzungswandung nimmt im Bereich der Abbremsmittel 21 kontinuierlich zum Aufnahmebereich 6 hin ab. Dadurch kommt es zu einer Verlangsamung der ausgesonderten Körner des granularen Materials, wodurch sich diese vermehrt im Aufnahmebereich 6 ansammeln. Dadurch steht ein ausreichend großes Reservoir oder Puffer von Saatgut für die Mitnehmer 17 für den Transport zum Abgabebereich hin bereit. Der entstehende Puffer ist durch die Doppelpfeile C in Figur 3 angedeutet. Wenn der entstehende Puffer eine ausreichende Größe aufweist, können Fehlstellen bei der Ausgabe der Dosiervorrichtung vermieden oder reduziert werden.

Die Dosiervorrichtung kann eine Sensoranordnung umfassen, mit der die Größe des Puffers und/oder ein von der Größe des Puffers abhängiger Parameter bestimmbar ist. Basierend darauf kann eine Regelung der Drehzahl der Fördereinrichtung 12 stattfinden.

Alternativ zu der in Figur 3 dargestellten Dosiervorrichtung könnte auch eine Dosiervorrichtung gemäß der DE 10 2012 105 048 verwendet werden.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Sämaschine, insbesondere Einzelkornsämaschine, umfassend:
zwei oder mehr Dosiervorrichtungen (1), die jeweils eine in einem Gehäuse (11) drehbar gelagerte Fördereinrichtung (12) umfassen, wobei mit Hilfe der Fördereinrichtung (12) Saatgut im Gehäuse (11) von einem Aufnahmebereich (6) in einen Abgabebereich förderbar ist;
ein Nachfüllsystem (4) zum Fördern von Saatgut zu den Dosiervorrichtungen (1); und
eine Steuervorrichtung;
**dadurch gekennzeichnet, dass**
die Steuervorrichtung so ausgebildet ist, dass sie basierend auf den Drehzahlen der Fördereinrichtungen (12) der Dosiervorrichtungen (1) eine durch die Sämaschine pro Fläche und/oder Zeitintervall ausgebrachte Körneranzahl bestimmt und das Nachfüllsystem (4) basierend auf der bestimmten pro Fläche und/oder Zeitintervall ausgebrachten Körneranzahl regelt oder steuert.

2. Sämaschine nach Anspruch 1, wobei die Steuervorrichtung so ausgebildet ist, dass sie die bestimmte pro Fläche und/oder Zeitintervall ausgebrachte Körneranzahl mit einem gewünschten Wert vergleicht und das Nachfüllsystem (4) basierend auf einem Ergebnis dieses Vergleichs regelt oder steuert.

3. Sämaschine nach Anspruch 1 oder 2, wobei das Nachfüllsystem (4) einen Verteilerkopf (9) und/oder einen Zentraldosierer (6) umfasst.

4. Verfahren zum Betreiben einer Sämaschine nach einem der vorangegangenen Ansprüche, umfassend die Schritte:
Bestimmen der Drehzahlen der Fördereinrichtungen (12) der Dosiervorrichtungen (1);
Bestimmen einer durch die Sämaschine pro Fläche und/oder Zeitintervall ausgebrachten Körneranzahl basierend auf den bestimmten Drehzahlen; und
Steuern oder Regeln des Nachfüllsystems (4) basierend auf der bestimmten pro Fläche und/oder Zeitintervall ausgebrachten Körneranzahl.

5. Verfahren nach Anspruch 4, außerdem umfassend Vergleichen der bestimmten pro Fläche und/oder Zeitintervall ausgebrachten Körneranzahl mit einem gewünschten Wert und Steuern oder Regeln des Nachfüllsystems (4) basierend auf einem Ergebnis dieses Vergleichs.
